# EUROPEAN PATENT SPECIFICATION

(11) **EP 3 174 335 B1**
(45) Date of publication and mention of the grant of the patent: **09.12.2020**
(21) Application number: 14900637.1
(22) Date of filing: 29.08.2014
(51) Int. Cl.: H04W 28/26, H04W 48/20, H04W 36/00, H04W 8/18

(54) **NETWORK FUNCTION CUSTOMIZING METHOD AND SYSTEM, AND NETWORK CONTROLLER**
VERFAHREN UND SYSTEM ZUR PERSONALISIERUNG VON NETZWERKFUNKTIONEN UND NETZWERKSTEUERGERÄT
PROCÉDÉ ET SYSTÈME DE PERSONNALISATION DE FONCTIONS DE RÉSEAU, ET CONTRÔLEUR DE RÉSEAU

(43) Date of publication of application: 31.05.2017
(73) Proprietor: Huawei Technologies Co., Ltd., Longgang District Shenzhen, Guangdong 518129 (CN)
(72) Inventor: LIU, Yalin, Shenzhen Guangdong 518129 (CN)
(74) Representative: Thun, Clemens
(86) International application number: PCT/CN2014/085604
(87) International publication number: WO 2016/029462

(56) References cited:
- CN-A- 101 026 874
- CN-A- 101 312 586
- CN-A- 101 483 855
- CN-A- 102 625 378
- US-A1- 2011 310 865
- US-A1- 2012 100 849
- US-A1- 2014 115 159

## Description

### TECHNICAL FIELD

Embodiments of the present invention relate to the field of communications technologies, and in particular, to a method and an electronic device for network function customization.

### BACKGROUND

With continuous development of science and technologies, mobile communication becomes an indispensable part of people's daily life. In particular, with completion and usage of the LTE (Long Term Evolution, Long Term Evolution) technical standard, a rate of the mobile communication is further improved.

However, in a current communications network, for a voice service, when a user roams and accesses a network, the network extracts service information from a local home domain of the user, which is a real-time process. The process consumes a relatively long time and has a relatively low service rate. For increasing data services, for example, data such as a video, an image, and customized news information of a user, in the prior art, when the user roams, related data information still needs to be extracted in real time from a local network in which the user is located, and a service rate is also relatively low.

US 2012/0100849 A1 refers to a method for modifying policy information associated with a roaming subscriber. The method includes receiving a first signaling message. The first signaling message includes a policy or quality of service (QoS) attribute associated with a roaming subscriber and originating from a home network of the roaming subscriber. The method also includes determining, using information associated with the roaming subscriber or a provider network, that the policy or QoS attribute should be modified and modifying the policy or QoS attribute for application in the provider network.

It can be seen that the communications network has a technical problem of a relatively low service rate in the prior art.

### SUMMARY

Embodiments of the present invention provide a method and a system for network function customization, so as to resolve a technical problem that a communications network has a relatively low service rate in the prior art. This problem is solved by the subject matter of the independent claims. Further implementation forms can be found in the dependent claims.

The technical solutions in the embodiments of this application have at least the following technical effects:

At least one type of information in user data and at least one type of information in network service information that are needed by an access terminal when the access terminal accesses a target network are obtained through analysis, and before the access terminal moves into the target network, the at least one type of information in the user data and the at least one type of information in the network service information are transmitted to the target network in advance, so that the target network prepares network resources for the access terminal according to the at least one type of information in the user data and the at least one type of information in the network service information. The target network prepares the network resources for the access terminal in advance, so that the target network can rapidly provide a service when the access terminal accesses the target network; or the network resources prepared by the target network include the user data needed by the access terminal, so that the access terminal can perform local access in the target network when the access terminal accesses the user data, thereby greatly improving a service rate of communications networks.

### BRIEF DESCRIPTION OF DRAWINGS

FIG. 1 is a schematic flowchart of a method for network function customization according to Embodiment 1 of the present invention;
FIG. 2 is a schematic diagram of interaction between an access terminal, a current network, and a target network according to Embodiment 1 of the present invention;
FIG. 3 is a schematic interaction diagram of network function customization in a mobile network according to Embodiment 1 of the present invention;
FIG. 4 is a schematic flowchart of a method for network function customization according to Embodiment 2 of the present invention;
FIG. 5 is a schematic block diagram of a system for network function customization according to Embodiment 3 of the present invention;
FIG. 6 is a structural block diagram of a current network device of a current network according to Embodiment 4 of the present invention; and
FIG. 7 is a structural block diagram of a current network device of a target network according to Embodiment 5 of the present invention.

### DESCRIPTION OF EMBODIMENTS

To resolve the technical problem that a communications network has a relatively low service rate in the prior art, embodiments of the present invention provide a method and an electronic device for network function customization.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In the following, the preferred implementation manners of the present invention are described in detail with reference to the accompanying drawings.

### Embodiment 1

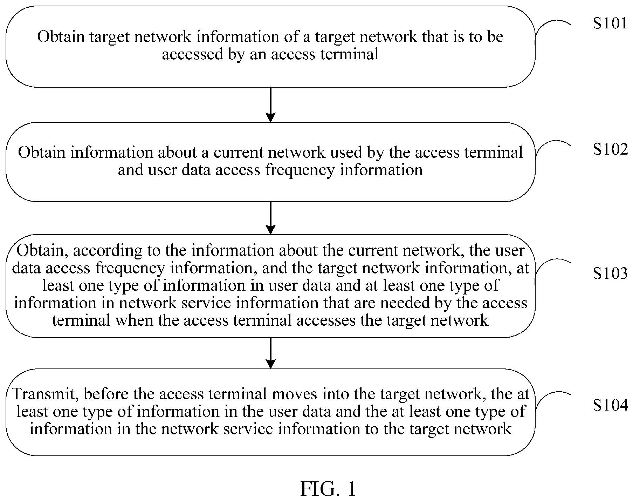

Referring to FIG. 1, this embodiment of this application provides a method for network function customization, where the method includes the following steps:
S101: Obtain target network information of a target network that is to be accessed by an access terminal.
S102: Obtain information about a current network used by the access terminal and user data access frequency information.
S103: Obtain, according to the information about the current network, the user data access frequency information, and the target network information, at least one type of information in user data and at least one type of information in network service information that are needed by the access terminal when the access terminal accesses the target network.
S104: Transmit, before the access terminal moves into the target network, the at least one type of information in the user data and the at least one type of information in the network service information to the target network.

In a specific implementation process, the current network that is currently used by the access terminal, that is, terminal equipment (TE, terminal equipment) and the target network that is to be accessed by the access terminal may be operator networks, virtual operator networks, or service providers, for example, Internet service providers ISPs (Internet service provider, Internet service provider). To avoid that the access terminal cannot rapidly obtain a network service when the access terminal moves into another network except a local network, a network device corresponding to the current network may first perform S101.

When S101 is performed to obtain the target network information of the target network, specifically, the target network that is to be accessed by the access terminal may be obtained by predicting a user behavior and requirement by using a network data analysis algorithm. The network data analysis algorithm is a big data analysis algorithm, for example, a decision tree (Decision Tree) C4.5 algorithm, a clustering algorithm K-Means, or a support vector machine Support Vector machines algorithm. A user generally releases some personal information in a network, for example, posts a microblog about where to go tomorrow on Microblog, or buys a plane ticket, a railway ticket, or a bus ticket in a network, or edits a travel memo in the cloud. Therefore, travel information of the access terminal and information about a current location of the access terminal may be obtained, and then the target network that is to be accessed by the access terminal may be obtained by means of prediction according to the travel information and the information about the current location of the user. For example, the user releases a travel message "Guys, I will go to Beihai on October 1", and then the network device obtains information about a current location of the access terminal, for example, "Shanghai", obtains the travel message by using a network data analysis algorithm, and further obtains, by performing data analysis on the travel message, that the access terminal will move to Beihai that is different from the current location on October 1, and it can be predicted that the target network that is to be accessed by the access terminal is a Beihai metropolitan area network. Further, target network information is obtained from the target network, where the target network information includes at least one type of the following information: a standard of the target network, a bandwidth of the target network, or quality of service QoS (Quality of Service, quality of service) of the target network.

When or after performing S101, the network device performs S102 to obtain the information about the current network used by the access terminal and the user data access frequency information. The information about the current network may include at least one type of the following information: a standard of the current network, a current subscribed bandwidth, or quality of service QoS of the current network. The user data access frequency information may include user private data access frequency information and user customized service access frequency information. Specifically, the user private data access frequency information may be about user private data that is not stored in the access terminal, for example, private data of a user that is stored in the cloud. The user customized service access frequency information may be about a customized service such as user customized news information or a game pack.

After obtaining the target network information, the information about the current network, and the user data access frequency information, S103 is performed to obtain, according to the information about the current network, the user data access frequency information, and the target network information, the at least one type of information in the user data and the at least one type of information in the network service information that are needed by the access terminal when the access terminal accesses the target network. The user data includes at least one type of the following information: a user private video or image or user private text information. The network service information includes: an available network standard, an access network bandwidth, and a network customized service.

In a specific implementation process, the available network standard and the access network bandwidth in the network service information may be obtained according to the standard of the current network, the current subscribed bandwidth, and the standard of the target network and the bandwidth of the target network in the target network information. For example, if the standard of the current network is a third generation mobile communications technology 3G, and the standard of the target network includes a third generation mobile communications technology 3G and a second generation mobile communications technology GSM, it can be obtained that the available network standard is 3G. Certainly, because an access device is generally downward compatible, if the standard of the target network supports only GSM, it can be obtained the available network standard is GSM. If the current subscribed bandwidth is 2 M, and the network bandwidth of the target network includes 2 M, 4 M, and 8 M, it can be obtained that the access bandwidth is 2 M.

The network customized service in the network service information may be obtained according to the user customized service access frequency information in the user data access frequency information. Specifically, a network customized service whose user customized service access frequency is greater than a threshold is obtained. For example, an access frequency of a user customized service news information A is 4 times per day, an access frequency of financial information B is 0.5 time per day, and an access frequency of a game pack C is 8 times per day. Assuming that the threshold is 2 times per day, the news information A and the game pack C may be obtained as network customized services.

Further, considering that the available network standard and the access network bandwidth of the target network may limit usage of some services, the network customized service may be obtained according to the available network standard, the access network bandwidth, and the user customized service access frequency information, where the network customized service is a service whose user customized service access frequency is greater than a threshold. For example, assuming that the available network standard of the target network is GSM, the access network bandwidth is relatively small, a video service is relatively slow, and quality of service is relatively poor, when the network customized service is obtained, even if an access frequency of the video service is greater than the threshold, the video service is excluded.

Similarly, the network device may obtain the user data according to only the user private data access frequency information in the user data access frequency information, or may obtain the user data according to the available network standard, the access network bandwidth, and the user private data access frequency information. For example, a user private data access frequency of private data stored in the cloud by the user: a "personal show video" is greater than a threshold, and the "personal show video" may be obtained as user data.

After the at least one type of information in the user data and the at least one type of information in the network service information are obtained by performing S103, S104 is performed, to transmit, before the access terminal moves into the target network, the at least one type of information in the user data and the at least one type of information in the network service information to the target network, so that the target network prepares network resources for the access terminal according to the at least one type of information in the user data and the at least one type of information in the network service information. Specifically, the target network receives and stores the user data, so that the access terminal can rapidly access user private user data in the target network when the access terminal accesses the target network, thereby greatly improving an access speed. In addition, the target network prepares corresponding network resources for the access terminal according to the network service information. The network resources include user data and a resource needed by the access terminal when the access terminal accesses the target network, for example, a bandwidth resource, a link resource, or a virtual machine resource. The network resources further include a resource for obtaining the network customized service in advance, for example, a storage resource or a bandwidth resource, so that the access terminal can rapidly access the target network, and the target network can rapidly provide a service when the access terminal accesses the network customized service.

In a specific implementation process, when S104 is performed, the network service information may be first carried in a network resource preparation request and sent to the target network, so that the target network completes network resource preparation corresponding to the network service information, and feeds back preparation completion information to the current network, in response to the network resource preparation request. After the preparation completion information fed back by the target network is received, the user data is transmitted to the target network.

This embodiment of this application further provides a push service. After the user data and the network service information are obtained, a service option may be generated and pushed to the user, so that the user selects user data that needs to be transmitted and a network customized service or customizes another service. In addition, the method for network function customization provided in this application may be executed by the network device automatically and periodically, or may be actively triggered by a user.

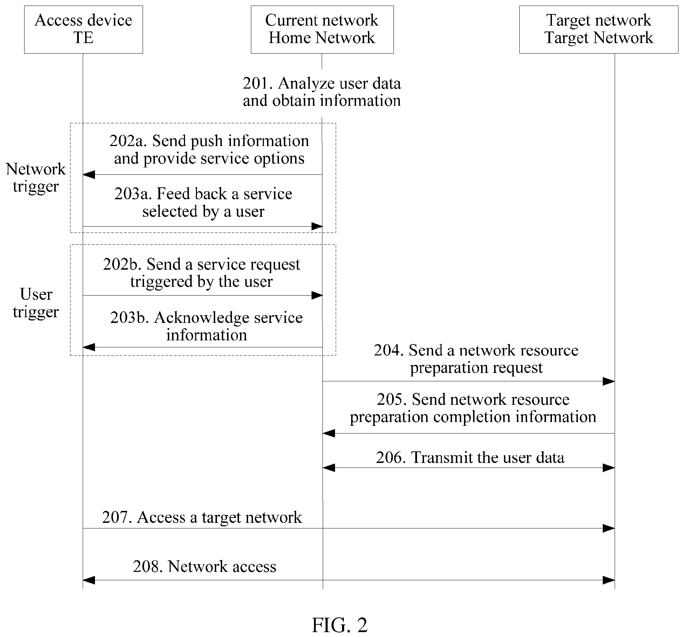

Referring to FIG. 2, the following describes the method for network function customization in combination with an interaction process between an access terminal, a current network, and a target network by using examples. The access device is represented by TE, the current network is represented by Home Network, and the target network is represented by Target Network. Home Network and Target Network may be operator networks, virtual operator networks, service providers (including Internet service providers ISPs), or the like.

S201: Analyze user data and obtain information. Specifically, a current network obtains a target network by analyzing user data, for example, analyzes user travel information (user travel arrangement information or flight information). Then, target network information is obtained from the target network, and information about the current network and user data access frequency information are obtained. Next, data analysis is performed by using the following information as input information: a standard of the current network and a current subscribed bandwidth in the information about the current network, a standard of the target network and a bandwidth of the target network in the target network information, and the user data access frequency information. Certainly, input for the data analysis is not limited to the foregoing information and may further include: bandwidth usage history information of an access terminal, bandwidth tariff information of the target network, service capability information of the target network, and the like. A user behavior and requirement are predicted through the data analysis, and target network function selection options, network customized service options, and user data movement options are output.

Step 202a: Send push information to the access terminal, and provide service options, so that a user selects a service, for example, selects a target network function (an available network standard and an access network bandwidth), and selects a network customized service and user data that needs to be moved.

Step 203a: The access terminal feeds back, to the current network, the service that is selected by the user from the service options.

Step 202a and step 203a may be replaced with step 202b and step 203b.

Step 202b: The access terminal sends a service request to the current network in response to an operation of actively triggering service customization by the user, where the service request includes service customization information selected by the user.

Step 203b: The current network receives the service request sent by the access terminal, and feeds back service acknowledgment information.

The foregoing steps 202a to 203b are optional. If the user does not accept a network service customization push, the network may automatically determine a service function for the user according to user history information.

Step 204: The current network sends a network resource preparation request to the target network. The network resource preparation request may carry a target network function and a network customized service, and requires the target network to prepare corresponding resources such as a network customized service, a bandwidth, a network standard, and QoS for the access terminal.

Step 205: The target network receives the network resource preparation request, completes corresponding network resource preparation, and sends network resource preparation completion information to the current network.

Step 206: The current network transmits the user data to the target network, so that the target network receives and stores the user data.

Step 207: The access terminal rapidly accesses the target network on the basis of the network resources prepared by the target network.

Step 208: The access terminal performs local access by using the target network function and the user data, as in Home Network.

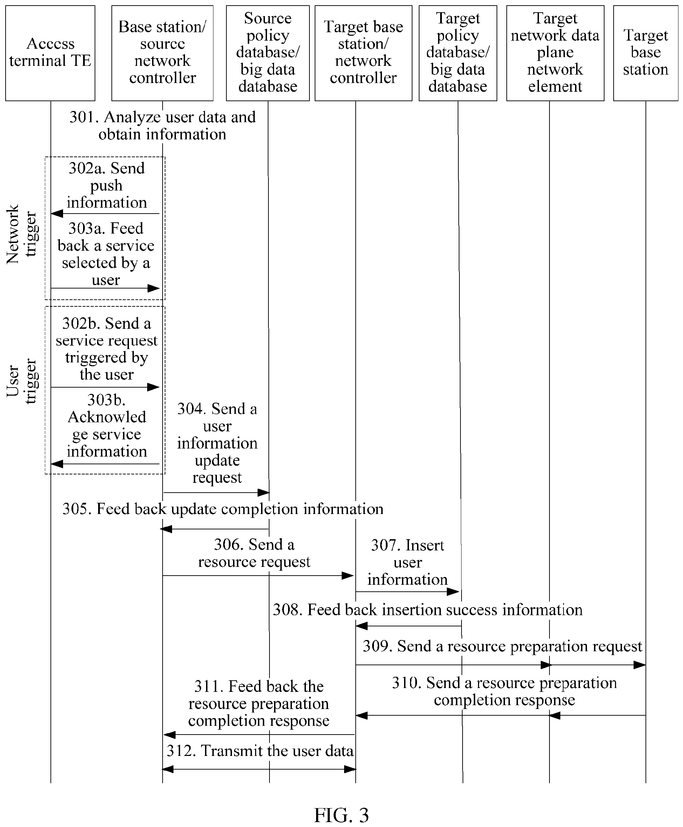

Referring to FIG. 3, FIG. 3 shows a process of network function customization in a mobile network. A current network includes: a base station/source network controller (BS/Source Network Controller) and a source policy database (Source Policy DB)/big data database (Big Data DB). The BS/Source Network Controller may be an integrated SDN (Software Defined Networking, software defined networking) controller, or may be an independent logical control entity. The BS/Source Network Controller and the Source Policy DB/Big Data DB may be different functional entities, or may be physically integrated with each other. A target network includes: a target base station/network controller (Target BS/Network Controller), a target policy database (Target Policy DB)/big data database (Big Data DB), and a target network data plane network element Target Data Plane elements. Similarly, the Target BS/Network Controller may be implemented based on an SDN controller, or may be an independent logical control entity. The target network data plane network element is a programmable data plane network element, for example, a switch or a router, and can implement flow path programming.

Steps 301 to 303 are the same as steps 201 to 203 in FIG. 2, and details are not described herein again. The following describes steps 304) to 312.

Step 304: When a user accepts a service option or customizes a particular service, a BS/Source Network Controller of a current network sends a user information update request to a source policy database. User information includes user data and/or network service information that are/is selected by the user. The network service information includes: a customized service, a value of an access bandwidth, an available standard of a target network, and the like. The user data includes: a photo, video, document, and the like that have a relatively high usage frequency. The user data may be customized by the user.

Step 305: The source policy database feeds back update completion information after completing user information update. The user may customize a network service, where the network service includes a network standard, a bandwidth, QoS, and the like. Once these services are changed, to operate subsequent services, services need to be provided according to the service requirement. Therefore, information after the change needs to be stored in the data.

Step 306: The source network controller of the current network sends a resource request to a target network controller, to request the target network to prepare network resources. The resource request carries the user data and/or the network service information. The network resources include but are not limited to: computation and storage resources, a virtual machine resource, user bandwidth requirement information, network function requirement information (for example, a secure and supported transmission protocol), and the like.

Step 307: The target network controller of the target network inserts the user information into a policy database after receiving the resource request.

Step 308: After the user information is inserted into the target policy database successfully, feed back insertion completion information to the target network controller.

Step 309: At the same time, the target network controller requires a data plane to prepare a data transmission resource, for example, a link bandwidth resources or flow path (bearer) establishment. At the same time, the target network controller sends a resource request to a target base station, to request the base station to reserve a bandwidth resource and prepare a corresponding network function (for example, a baseband function and coding function specific to a network standard).

Step 310: The data plane and the base station send a resource preparation completion response to the target controller after completing the resource preparation.

Step 311: The target controller feeds back the resource preparation completion response to the source controller.

Step 312: Transmit the user data from the source controller (network) to the target controller (network), and copy user private user data, for example, a video, a picture, or data, to the target network, so that the user performs local access after accessing the target network.

### Embodiment 2

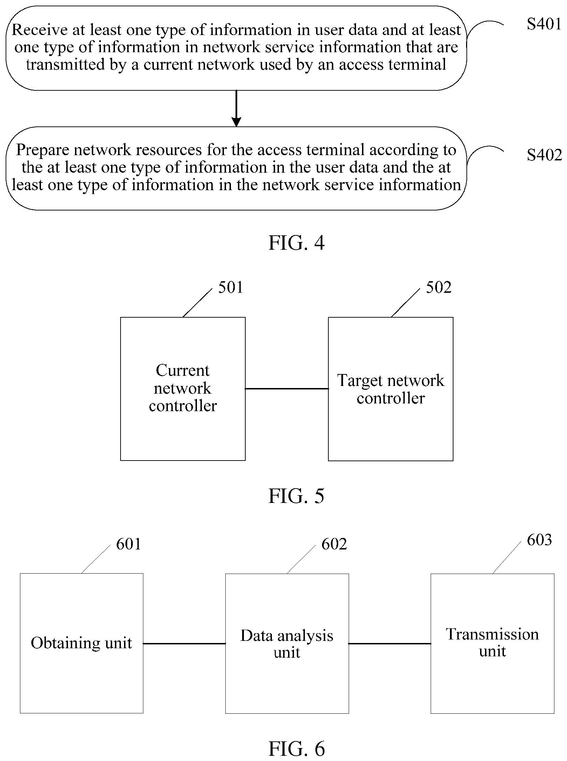

Referring to FIG. 4, this embodiment of this application further provides a method for network function customization, where the method includes the following steps:

S401: Receive at least one type of information in user data and at least one type of information in network service information that are transmitted by a current network used by an access terminal, where the user data and the network service information are information needed by the access terminal when the access terminal accesses a target terminal.

S402: Prepare network resources for the access terminal according to the at least one type of information in the user data and the at least one type of information in the network service information.

This embodiment is based on an inventive concept the same as that in Embodiment 1. A target network receives at least one type of information in user data and at least one type of information in network service information that are transmitted by a current network, where the user data includes a user private video or image or user private text information, and the network service information includes any one of the following information: a network standard available to an access terminal, an access network bandwidth, quality of service of a network, and a network customized service. The target network stores the user data after receiving the user data sent by the access terminal, so that when the access terminal accesses the user data in the target network, the target network can rapidly provide a service for the access terminal according to the user data that is locally stored, thereby greatly improving a service speed. In addition, when receiving the network service information, the target network can prepare, in advance for the access terminal, network resources corresponding to the network service information, so that the access terminal can rapidly access the target network, and the target network can rapidly provide a service when the access terminal accesses a network customized service.

### Embodiment 3

Referring to FIG. 5, this embodiment of this application further provides a system for network function customization in combination with Embodiment 1 and Embodiment 2, where the system includes:
a current network controller 501, configured to: obtain target network information of a target network that is to be accessed by an access terminal; obtain information about a current network used by the access terminal and user data access frequency information; obtain, according to the information about the current network, the user data access frequency information, and the target network information, at least one type of information in user data and at least one type of information in network service information that are needed by the access terminal when the access terminal accesses the target network; and transmit, before the access terminal moves into the target network, the at least one type of information in the user data and the at least one type of information in the network service information to a target network controller 502 corresponding to the target network; and
the target network controller 502, configured to: receive the at least one type of information in the user data and the at least one type of information in the network service information; and prepare network resources for the access terminal according to the at least one type of information in the user data and the at least one type of information in the network service information.

In a specific implementation process, the information about the current network obtained by the current network controller 501 includes at least one type of the following information: a standard of the current network, a current subscribed bandwidth, or quality of service of the current network; the target network information includes at least one type of the following information: a standard of the target network, a bandwidth of the target network, or quality of service of the target network; and the user data access frequency information obtained by the current network controller 501 includes: user private data access frequency information and user customized service access frequency information.

In a specific implementation process, when obtaining the target network information of the target network that is to be accessed by the access terminal, the current network controller 501 is specifically configured to: obtain travel information of the access terminal and information about a current location of the access terminal; and obtain, by means of prediction according to the travel information and the information about the current location, the target network that is to be accessed by the access terminal, and obtain the target network information from the target network.

After obtaining the target network and the target network information, the current network controller 501 is further specifically configured to: obtain an available network standard and an access network bandwidth in the network service information according to the standard of the current network and the current subscribed bandwidth in the information about the current network and the standard of the target network and the bandwidth of the target network in the target network information; obtain a network customized service in the network service information according to the available network standard, the access network bandwidth, and the user customized service access frequency information in the user data access frequency information, where the network customized service is a service whose user customized service access frequency is greater than a threshold; and/or obtain the user data according to the available network standard, the access network bandwidth, and the user private data access frequency information in the user data access frequency information. The user data includes at least one type of the following information: a user private video or image or user private text information.

Variation manners and specific examples of the method for network function customization provided in the foregoing embodiments of FIG. 1 to FIG. 4 are also applicable to the system in this embodiment. By means of the foregoing detailed description of the method for network function customization, persons skilled in the art can clearly know an implementation method of the system in this embodiment. Therefore, for concision of the specification, details are not described herein again.

### Embodiment 4

Referring to FIG. 6, this embodiment of this application provides a network controller, including:
an obtaining unit 601, configured to obtain target network information of a target network that is to be accessed by an access terminal; and obtain information about a current network used by the access terminal and user data access frequency information;
a data analysis unit 602, configured to obtain, according to the information about the current network, the user data access frequency information, and the target network information, at least one type of information in user data and at least one type of information in network service information that are needed by the access terminal when the access terminal accesses the target network; and
a transmission unit 603, configured to transmit, before the access terminal moves into the target network, the at least one type of information in the user data and the at least one type of information in the network service information to the target network.

In a specific implementation process, the information about the current network includes at least one type of the following information: a standard of the current network, a current subscribed bandwidth, or quality of service of the current network; and the target network information includes at least one type of the following information: a standard of the target network, a bandwidth of the target network, or quality of service of the target network. The user data access frequency information includes: user private data access frequency information and user customized service access frequency information.

Further, when obtaining the target network information of the target network that is to be accessed by the access terminal, the obtaining unit 601 is specifically configured to: obtain travel information of the access terminal and information about a current location of the access terminal; and obtain, by means of prediction according to the travel information and the information about the current location, the target network that is to be accessed by the access terminal, and obtain the target network information from the target network.

After the obtaining unit 601 obtains the information about the current network, the target network information, and the user data access frequency information, the data analysis unit 602 is specifically configured to: obtain an available network standard and an access network bandwidth in the network service information according to the standard of the current network and the current subscribed bandwidth in the information about the current network and the standard of the target network and the bandwidth of the target network in the target network information; obtain a network customized service in the network service information according to the available network standard, the access network bandwidth, and the user customized service access frequency information in the user data access frequency information, where the network customized service is a service whose user customized service access frequency is greater than a threshold; and obtain the user data according to the available network standard, the access network bandwidth, and the user private data access frequency information in the user data access frequency information. The user data includes at least one type of the following information: a user private video or image or user private text information.

Variation manners and specific examples of the method for network function customization provided in the foregoing embodiments of FIG. 1 to FIG. 3 are also applicable to the network controller in this embodiment. By means of the foregoing detailed description of the method for network function customization, persons skilled in the art can clearly know an implementation method of the network controller in this embodiment. Therefore, for concision of the specification, details are not described herein again.

### Embodiment 5

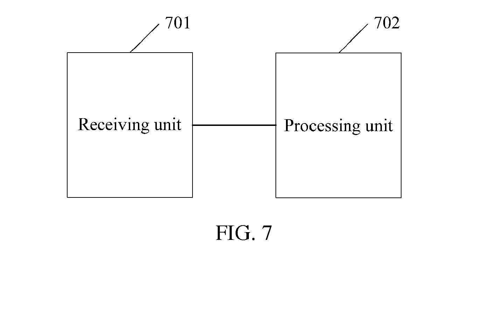

Referring to FIG. 7, this embodiment of this application provides a network controller, including:
a receiving unit 701, configured to receive at least one type of information in user data and at least one type of information in network service information that are transmitted by a current network used by an access terminal, where the user data and the network service information are information needed by the access terminal when the access terminal accesses a target terminal; and
a processing unit 702, where the processing unit 702 is configured to prepare network resources for the access terminal according to the at least one type of information in the user data and the at least one type of information in the network service information.

In a specific implementation manner, the user data includes a user private video or image or user private text information. The network service information includes at least one type of the following information: a network standard available to the access terminal, an access network bandwidth, quality of service of a network, or a network customized service.

Variation manners and specific examples of the method for network function customization provided in the foregoing embodiment of FIG. 4 are also applicable to the network controller in this embodiment. By means of the foregoing detailed description of the method for network function customization, persons skilled in the art can clearly know an implementation method of the network controller in this embodiment. Therefore, for concision of the specification, details are not described herein again.

The one or more embodiments of the present invention can achieve the following technical effects:

At least one type of information in user data and at least one type of information in network service information that are needed by an access terminal when the access terminal accesses a target network are obtained through analysis, and before the access terminal moves into the target network, the at least one type of information in the user data and the at least one type of information in the network service information are transmitted to the target network in advance, so that the target network prepares network resources for the access terminal according to the at least one type of information in the user data and the at least one type of information in the network service information. The target network prepares the network resources for the access terminal in advance, so that the target network can rapidly provide a service when the access terminal accesses the target network; or the network resources prepared by the target network include the user data needed by the access terminal, so that the access terminal can perform local access in the target network when the access terminal accesses the user data, thereby greatly improving a service rate of communications networks.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims.

## Claims

1. A method for network function customization performed by a system comprising a first network controller in a current network and a second network controller in a target network, wherein the method comprises:
• obtaining, by the first network controller, target network information of the target network that is to be accessed by an access terminal (S101),
wherein the target network information contains a standard of the target network and a bandwidth of the target network;
• obtaining, by the first network controller, information about the current network used by the access terminal and user data access frequency information (S102), wherein the user data access frequency information includes private data access frequency information and user customized service access frequency information, wherein the private data access frequency information is access frequency information about user private data not stored in the access terminal and the user customized service access frequency information is access frequency information about a user customized service,
wherein the information about the current network contains a standard of the current network;
• obtaining, by the first network controller, according to the standard of the current network and the standard of the target network, a network standard available to the access terminal in the target network and needed by the access terminal when the access terminal accesses the target network,
obtaining, by the first network controller, according to the user data access frequency information, user data that is needed by the access terminal when the access terminal accesses the target network (S103),
wherein the user data is at least one of user private video information, user private image information and user private text information, obtaining, by the first network controller, according to the obtained available network standard, the bandwidth of the target network and the user customized service access frequency information, a network customized service, wherein the network customized service is a service whose user customized service access frequency is greater than a threshold,
• transmitting, by the first network controller, before the access terminal moves into the target network, the user data and information indicating the network customized service to the second network controller (S104);
• receiving, by the second network controller, the user data and the information indicating the network customized service (S401);
• preparing, by the second network controller, network resources for the access terminal according to the user data and the information indicating the network customized service (S402).

2. The method according to claim 1, wherein the obtaining, by the first network controller, the target network information of the target network that is to be accessed by the access terminal specifically comprises:
obtaining travel information of the access terminal and information about a current location of the access terminal; and
obtaining, by means of prediction according to the travel information and the information about the current location, the target network that is to be accessed by the access terminal, and obtaining the target network information from the target network.

3. A system comprising a first network controller in a source network and a second network controller in a target network, wherein the system is configured and intended to perform any of the methods according to claims 1-2.

## Patentansprüche

1. Verfahren zur Anpassung von Netzwerkfunktionen, das von einem System durchgeführt wird, das einen ersten Netzwerk-Controller in einem aktuellen Netzwerk und einen zweiten Netzwerk-Controller in einem Zielnetzwerk umfasst, das Verfahren Folgendes umfassend:
• Erhalten, durch den ersten Netzwerk-Controller, von Zielnetzwerkinformationen des Zielnetzwerks, auf das durch ein Zugangsterminal (S101) zugegriffen werden soll, wobei die Zielnetzwerkinformationen einen Standard des Zielnetzwerks und eine Bandbreite des Zielnetzwerks enthalten;
• Erhalten, durch den ersten Netzwerk-Controller, von Informationen bezüglich des aktuellen Netzwerks, das vom Zugangsterminal verwendet wird und von Benutzerdaten-Zugriffshäufigkeitsinformationen (S102), wobei die Benutzerdaten-Zugriffshäufigkeitsinformationen private Datenzugriffs-Häufigkeitsinformationen und benutzerangepasste Dienstzugriffs-Häufigkeitsinformationen enthalten, wobei die privaten Datenzugriffs-Häufigkeitsinformationen Zugriffshäufigkeits-Informationen über private Benutzerdaten sind, die nicht im Zugangsterminal gespeichert sind, und wobei die benutzerangepassten Dienstzugriffs-Häufigkeitsinformationen Zugriffshäufigkeits-Informationen über einen benutzerangepassten Dienst sind, wobei die Informationen über das aktuelle Netzwerk einen Standard des aktuellen Netzwerks enthalten;
• Erhalten, durch den ersten Netzwerk-Controller, entsprechend dem Standard des aktuellen Netzwerks und dem Standard des Zielnetzwerks, eines Netzwerkstandards, der dem Zugangsterminal im Zielnetzwerk zur Verfügung steht und von dem Zugangsterminal benötigt wird, wenn das Zugangsterminal auf das Zielnetzwerk zugreift, sowie Erhalten, durch den ersten Netzwerk-Controller, entsprechend der Benutzerdaten-Zugriffshäufigkeitsinformation, von Benutzerdaten, die von dem Zugangsterminal benötigt werden, wenn das Zugangsterminal auf das Zielnetzwerk zugreift (S103), wobei die Benutzerdaten mindestens eine der folgenden Informationen sind: private Videoinformationen des Benutzers, private Bildinformationen des Benutzers und private Textinformationen des Benutzers, sowie Erhalten, durch den ersten Netzwerk-Controller, entsprechend dem erhaltenen verfügbaren Netzwerkstandard, der Bandbreite des Zielnetzwerks und der benutzerangepassten Dienstzugriffs-Häufigkeitsinformation, eines netzwerkspezifischen Dienstes, wobei der netzwerkspezifische Dienst ein Dienst ist, dessen benutzerangepasste Dienstzugriffshäufigkeit einen Schwellenwert überschreitet,
• Übertragen der Benutzerdaten und Informationen, die den netzwerkspezifischen Dienst anzeigen, durch den ersten Netzwerk-Controller an den zweiten Netzwerk-Controller (S104), bevor das Zugriffsterminal in das Zielnetz gelangt;
• Empfangen der Benutzerdaten und der Informationen, die den netzwerkspezifischen Dienst (S401) anzeigen, durch den zweiten Netzwerk-Controller;
• Vorbereiten der Netzwerkressourcen für das Zugangsterminal durch den zweiten Netzwerk-Controller gemäß den Benutzerdaten und den Informationen, die den netzwerkspezifischen Dienst angeben (S402).

2. Verfahren nach Anspruch 1, wobei das Erhalten der Zielnetzwerkinformationen des Zielnetzwerks, auf die das Zugangsterminal zugreifen soll, durch den ersten Netzwerk-Controller insbesondere Folgendes umfasst:
Erhalten von Reiseinformationen des Zugangsterminals sowie von Informationen über einen aktuellen Standort des Zugangsterminals; und
Erhalten des Zielnetzwerks, auf das das Zugangsterminal zugreifen soll, durch Vorhersage anhand der Reiseinformationen und der Informationen über den aktuellen Standort sowie Erhalten der Zielnetzwerkinformationen vom Zielnetzwerk.

3. System, umfassend einen ersten Netzwerk-Controller in einem Quellnetzwerk und einen zweiten Netzwerk-Controller in einem Zielnetzwerk, wobei das System dafür konfiguriert und vorgesehen ist, eines der Verfahren nach den Ansprüchen 1 bis 2 durchzuführen.

## Revendications

1. Procédé de personnalisation de fonctions de réseau, exécuté par un système comprenant un premier contrôleur de réseau dans un réseau actuel et un second contrôleur de réseau dans un réseau cible, le procédé comprenant :
• l'obtention, par le premier contrôleur de réseau, d'informations de réseau cible du réseau cible auxquelles doit accéder un terminal d'accès (S101), les informations de réseau cible contenant une norme du réseau cible et une bande passante du réseau cible ;
• l'obtention, par le premier contrôleur de réseau, d'informations concernant le réseau actuel utilisé par le terminal d'accès et d'informations de fréquence d'accès aux données d'utilisateur (S102), les informations de fréquence d'accès aux données d'utilisateur comprenant des informations de fréquence d'accès aux données privées et des informations de fréquence d'accès au service personnalisé par l'utilisateur, les informations de fréquence d'accès aux données privées étant des informations de fréquence d'accès concernant les données privées d'utilisateur non stockées dans le terminal d'accès, et les informations de fréquence d'accès au service personnalisé par l'utilisateur étant des informations de fréquence d'accès concernant un service personnalisé par l'utilisateur, les informations concernant le réseau actuel contenant une norme du réseau actuel ;
• l'obtention, par le premier contrôleur de réseau, selon la norme du réseau actuel et la norme du réseau cible, d'une norme de réseau disponible pour le terminal d'accès dans le réseau cible et nécessaire au terminal d'accès lorsque le terminal d'accès accède au réseau cible, l'obtention, par le premier contrôleur de réseau, selon les informations de fréquence d'accès aux données d'utilisateur, des données d'utilisateur qui sont nécessaires au terminal d'accès lorsque le terminal d'accès accède au réseau cible (S103), les données d'utilisateur étant des informations vidéo privées d'utilisateur et/ou des informations d'image privées d'utilisateur et/ou des informations de texte privées d'utilisateur, l'obtention, par le premier contrôleur de réseau, selon la norme de réseau disponible obtenue, la bande passante du réseau cible et les informations de fréquence d'accès au service personnalisé par l'utilisateur, d'un service de réseau personnalisé, le service de réseau personnalisé étant un service dont la fréquence d'accès au service d'utilisateur personnalisé est supérieure à un seuil,
• la transmission, par le premier contrôleur de réseau, avant que le terminal d'accès ne passe au réseau cible, des données et des informations d'utilisateur indiquant le service de réseau personnalisé au second contrôleur de réseau (S104) ;
• la réception, par le second contrôleur de réseau, des données et des informations d'utilisateur indiquant le service de réseau personnalisé (S401) ;
• la préparation, par le second contrôleur de réseau, des ressources de réseau pour le terminal d'accès en fonction des données et des informations d'utilisateur indiquant le service de réseau personnalisé (S402).

2. Procédé selon la revendication 1, dans lequel l'obtention, par le premier contrôleur de réseau, des informations de réseau cible du réseau cible devant faire l'objet d'un accès par le terminal d'accès comprend spécifiquement :
l'obtention d'informations de déplacement du terminal d'accès et d'informations concernant un emplacement actuel du terminal d'accès ; et
l'obtention, au moyen d'une prédiction en fonction des informations de déplacement et des informations concernant l'emplacement actuel, du réseau cible devant faire l'objet d'un accès par le terminal d'accès, et l'obtention des informations de réseau cible à partir du réseau cible.

3. Système comprenant un premier contrôleur de réseau dans un réseau source et un second contrôleur de réseau dans un réseau cible, le système étant conçu et destiné à exécuter l'un quelconque des procédés selon les revendications 1 à 2.
